# EUROPÄISCHE PATENTSCHRIFT

(11) **EP 2 244 798 B1**
(45) Veröffentlichungstag und Bekanntmachung des Hinweises auf die Patenterteilung: **18.05.2016**
(21) Anmeldenummer: 09718336.2
(22) Anmeldetag: 28.01.2009
(51) Int. Cl.: B01B 1/00

(54) **VERDAMPFUNGSEINHEIT ZUR ERZEUGUNG GASFÖRMIGEN AMMONIAKS**
EVAPORATION UNIT FOR PRODUCING GASEOUS AMMONIA
UNITÉ D'ÉVAPORATION POUR LA PRODUCTION D'AMMONIAC GAZEUX

(30) Priorität: 29.02.2008 DE 102008012087; 16.05.2008 DE 102008023938
(43) Veröffentlichungstag der Anmeldung: 03.11.2010
(73) Patentinhaber: Continental Automotive GmbH, 30165 Hannover (DE)
(72) Erfinder: BRÜCK, Rolf, 51429 Bergisch Gladbach (DE); VORSMANN, Christian, 51105 Köln (DE); SCHEPERS, Sven, 53844 Troisdorf (DE); HODGSON, Jan, 53840 Troisdorf (DE); BRUGGER, Marc, 53819 Neunkirchen (DE)
(86) Internationale Anmeldenummer: PCT/EP2009/050901
(87) Internationale Veröffentlichungsnummer: WO 2009/109423

(56) Entgegenhaltungen:
- DE-A1- 3 024 927
- DE-A1-102005 023 956
- DE-C1- 4 029 260
- US-A1- 2003 188 855
- US-A1- 2004 105 789

## Beschreibung

Die vorliegende Erfindung betrifft eine Verdampfungseinheit zur Erzeugung eines Ammoniak umfassenden Gasstroms. Eine solche Verdampfungseinheit findet insbesondere Anwendung zur Bereitstellung gasförmigen Ammoniaks aus einem Ammoniak-Vorläufer, insbesondere in flüssiger und/oder fester Form. Die Erfindung findet insbesondere auch Anwendung im Rahmen der Abgasnachbehandlung bei Kraftfahrzeugen.

Aus US 2004/0105789 ist ein chemischer Mikroreaktor zur Bereitstellung eines Oxidationsmittels für eine Brennstoffzelle bekannt. In dem chemischen Mikroreaktor soll bspw. Kohlenmonoxid unter Zuführung von Wasser und bei Vorhandensein einer katalytischen Substanz zu Kohlendioxid umgesetzt werden. Der chemische Mikroreaktor wird im Wesentlichen aus drei übereinander geschichteten Substraten gebildet. Ein Strömungskanal wird durch Mikrostrukturierung eines Substrats mit Hilfe von Methoden aus der Halbleiterverarbeitung hergestellt, wobei das Strömungskanäle enthaltende Substrat von zwei weiteren Substraten von zwei Seiten eingeschlossen wird. Zudem ist auf einer Seite des Strömungskanals eine Heizvorrichtung angeordnet.

Insbesondere bei Dieselverbrennungsmaschinen hat es sich bewährt, dem von der Verbrennungskraftmaschine erzeugten Abgas Harnstoff in wässriger Lösung direkt oder nach einer abgas-externen Hydrolyse Ammoniak zuzugeben. Hierbei kommt bei bekannten Verfahren ein Hydrolyse-Katalysator zum Einsatz, an dem aus dem Harnstoff Ammoniak gewonnen wird. Die wässrige Harnstofflösung wird stromauf des Hydrolyse-Katalysators zugegeben, in gasförmigen Zustand überführt und mit dem Hydrolyse-Katalysator in Kontakt gebracht. Der dabei generierte Ammoniak reagiert dann beispielsweise mit einem so genannten SCR-Katalysator weiter stromabwärts im Abgasstrom mit den dort enthaltenen Stickoxiden zu molekularen Stickstoff und Wasser.

Bei der Verdampfung der wässrigen Harnstofflösung ist die Temperaturführung besonders schwierig. Dies ist gerade unter dem Aspekt zu berücksichtigen, dass die benötigten Mengen der Harnstofflösung einerseits und die verfügbaren Temperaturen andererseits während einer mobilen Anwendung stark variieren können. Wird eine Verdampfung nicht vollständig erreicht, können sich Zwischenprodukte bilden, die gegebenenfalls zur Verstopfung der Verdampfereinheit führen können. Derartige, unerwünschte, Nebenprodukte sind beispielsweise wasserunlösliches Biuret, das sich aus Isocyansäure und Harnstoff bildet, und Cyanursäure, welche das Trimerisierungsprodukt der Isocyansäure darstellt. Bei der Verdampfung eines Ammoniak-Vorläufers, insbesondere einer flüssigen Harnstoff Wasser-Lösung, wurde beobachtet, dass die Temperatureinbringung in die Flüssigkeit sehr schnell über einen kritischen Temperaturbereich hinweg erfolgen muss, um die Bildung der genannten unerwünschten, teilweise nicht mehr entfernbaren, Verbindungen zu vermeiden.

Es sind bereits Vorrichtungen zur abgas-externen Verdampfung einer Harnstoff Wasser-Lösung beschrieben worden, allerdings konnten diese bislang zumindest für den Einsatz im Automobilbereich nicht überzeugen. Die bekannten Verdampfungsvorrichtungen können hier teilweise nicht die gewünschte Vollständigkeit der Verdampfung über alle Betriebszustände und/oder Mengen des zu verdampfenden Ammoniak-Vorläufers garantieren. Dies trifft insbesondere dann zu, wenn eine hochdynamische Regelung der Verdampfungseinheit unter Berücksichtigung von Betriebszuständen einer mobilen Verbrennungskraftmaschine, wie beispielweise einem Diesel-Motor, gegeben ist.

Hiervon ausgehend ist es Aufgabe der vorliegenden Erfindung, die mit Bezug auf den Stand der Technik geschilderten Probleme zumindest teilweise zu lösen. Insbesondere soll eine Verdampfungseinheit angegeben werden, die ein schnelles und vollständiges Verdampfen einer Harnstoff Wasser-Lösung zur Erzeugung eines Ammoniak umfassenden Gasstroms in exakt vorgegebenen quantitativen Mengen hochdynamisch bereitstellt. Dabei soll die Verdampfungseinheit kompakt und einfach aufgebaut sein. Außerdem wird gewünscht, dass die Verdampfungseinheit kostengünstig herstellbar ist.

Diese Aufgaben werden gelöst mit einer Verdampfungseinheit gemäß den Merkmalen des Patentanspruchs 1. Vorteilhafte Ausgestaltungen der Verdampfungseinheit werden in den abhängig formulierten Patentansprüchen angegeben. Die in den abhängig formulierten Patentansprüchen einzeln angegebenen Merkmale sind in beliebiger, technologisch sinnvoller, Weise miteinander kombinierbar und zeigen weitere Ausgestaltungen der Erfindung auf. Die Erfindung wird zudem durch die Beschreibung, insbesondere im Zusammenhang mit den Figuren, weiter charakterisiert und präzisiert.

Die erfindungsgemäße Verdampfungseinheit zur Erzeugung eines Ammoniak umfassenden Gasstroms weist zumindest auf:
- ein Gehäuse,
- wenigstens einen mäanderförmigen Strömungskanal mit einem Einlauf und einem Auslauf, der von einer geschlossenen Wand begrenzt ist,
- wenigstens einen Heizleiter, der zumindest in einem ersten Verdampfungsabschnitt eines wenigstens einen Strömungskanal zwischen Gehäuse und der Wand angeordnet ist und koaxial verläuft.

Die Verdampfungseinheit ist bevorzugt sehr kompakt aufgebaut und beispielsweise Rohr-ähnlicher Gestalt. Die äußeren Abmessungen einer solchen Verdampfungseinheit sind beispielsweise eine Länge von ca. 400 mm und ein Durchmesser im Bereich von 50 mm. Diese Verdampfungseinheit ist somit insbesondere dazu geeignet, Teil eines Leitungsabschnitts einer Abgasanlage einer mobilen Verbrennungskraftmaschine und/oder Teil eines Leitungsabschnitts eines in die Abgasleitung mündenden Zusatzsystems zu sein.

Das Gehäuse ist regelmäßig mit einem Stahl-Werkstoff gebildet. Es wird besonders bevorzugt, dass das Gehäuse ein Stahlrohr ist. Bei dem Gehäuse ist nicht zwingend eine Hochtemperatur-Festigkeit und/oder eine besonders hohe Korrosionsbeständigkeit erforderlich, weil die Verdampfungseinheit regelmäßig außerhalb der mit Abgas beströmten und folglich heißen Bereiche des Abgassystems angeordnet ist.

Der Strömungskanal ist "mäanderförmig" ausgebildet. Das heißt zunächst einmal (nur), dass ein nicht-gradliniger Verlauf des Strömungskanals verwirklicht ist. Ganz besonders bevorzugt ist, dass der Strömungskanal eine periodische Verlaufsänderung um eine zentrale Achse des Strömungskanals bzw. der Verdampfungseinheit durchführt. Dieser mäanderförmige Verlauf wird insbesondere durch einen wellenförmigen Verlauf beschrieben. Die Anzahl der Strömungskanäle kann entsprechend den gewünschten Bedingungen gewählt werden, bevorzugt ist die Ausgestaltung mit einem einzigen mäanderförmigen Strömungskanal. Gegebenenfalls ist aber auch möglich, dass wenigstens ein weiterer (z.B. bei Bedarf hinzu schaltbarer) Strömungskanal vorgesehen ist (z.B. für die Bereitstellung von relativ viel Ammoniakgas).

Bezüglich des Einlaufs ist zu erwähnen, dass dieser regelmäßig mit einer Pumpe und/oder einen Reservoir verbunden werden kann, also somit die Einleitung des Ammoniak-Vorläufers (z.B. Harnstoff-Wasser-Lösung) in die Verdampfungseinheit bzw. in den mäanderförmigen Strömungskanal realisiert. Auf der gegenüberliegenden Seite ist dann regelmäßig der Auslass vorgesehen, aus dem (praktisch reines) Ammoniakgas den Strömungskanal verlässt. Der Strömungskanal wird regelmäßig von einer einzelnen, geschlossenen und insbesondere separaten Wand begrenzt. Die Wand sorgt dafür, dass der zugeführte Ammoniak-Vorläufer vollständig verdampft wird und am Auslauf wieder austritt.

Darüber ist wenigstens ein Heizleiter vorgesehen. Der Heizleiter ist insbesondere ein elektrischer Heizleiter, der schnell und bedarfsgerecht hohe Temperaturen erreicht. Bevorzugt ist, dass (nur) ein Heizleiter im Verdampfungsabschnitt vorgesehen ist, gegebenenfalls kann hier aber auch (für einen bestimmten Bereich) eine weitere Heizleiteranordnung oder mehrere weitere Heizleiter vorgesehen sein. Der Heizleiter verläuft zudem koaxial zum Strömungskanal. Dabei ist insbesondere gemeint, dass der Heizleiter nach Art von Schlaufen, einer Wendel oder dergleichen um den Strömungskanal herum angeordnet ist. Dazu ist der Heizleiter gegebenenfalls mit einer entsprechenden Strom- bzw. Spannungsversorgung zu versehen. Demzufolge sind elektrische Anschlüsse an der Verdampfungseinheit vorzusehen, die gegebenenfalls mit einer geeigneten Steuerung zu verbinden sind. Der Heizleiter wird dabei unter Strom (zeitweise) gesetzt und erzeugt aufgrund der Ohmschen Widerstandserwärmung Wärme, die (mittelbar) auch an den Strömungskanal bzw. dessen Wand übertragen wird. Durch die Anordnung mehrerer Heizleiter in dem zumindest einen ersten Verdampfungsabschnitt kann die Temperatur des zu erzeugenden Gasstromes innerhalb des Strömungskanals gezielt beeinflusst werden.

Dieser sehr kompakte Aufbau erlaubt durch die Positionierung des Heizleiters eine schnelle Einbringung der Wärme und damit eine besonders schnelle Temperaturerhöhung in den mäanderförmigen Strömungskanal, durch den der Ammoniak-Vorläufer geleitet wird.

Besonders bevorzugt ist in diesem Zusammenhang, dass die geschlossene Wand mit einem Rohr umfassend Titan gebildet ist. Insbesondere handelt es sich hierbei um ein im Wesentlichen aus Titan bestehendes Röhrchen (z.B. größer 90 Gew.-% Titan), in dessen Wand eine Wellstruktur eingebracht ist, wobei die Wellstruktur innen und/oder außen vorliegen kann. Das Rohr wird dabei beispielsweise mit einem Durchmesser kleiner als 6 mm bereitgestellt.

Gemäß einer Weiterbildung der Erfindung wird vorgeschlagen, dass die Wand zumindest teilweise mit einer Hydrolyse-Beschichtung versehen ist. Die Hydrolyse-Beschichtung ist so ausgeführt, dass die Hydrolyse von Harnstoff hin zu Ammoniak begünstigt wird. Hierfür können poröse Beschichtungen, Oxide und/oder Salze eingesetzt werden, Für den Fall, dass die Wand des Strömungskanals mit Titan gebildet ist, wird insbesondere die Bereitstellung von Titanoxid auf der Wand vorgeschlagen, so dass dieses Titanoxid mit dem Ammoniak-Vorläufer in Kontakt tritt und die Umwandlung von Harnstoff-Wasser-Lösung zu Ammoniak begünstigt. Nur der Vollständigkeit sei darauf hingewiesen, dass die Hydrolyse-Beschichtung nur in einem Teil des ersten Verdampfungsabschnitts vorgesehen sein kann.

Außerdem wird auch vorgeschlagen, dass der wenigstens eine Heizleiter zumindest in dem ersten Verdampfungsabschnitt beabstandet zum Gehäuse und dem wenigstens einen Strömungskanal angeordnet ist. Das heißt mit anderen Worten auch, dass Mittel vorgesehen sind, die den Heizleiter sowohl mit einem Abstand zum Gehäuse als auch zu dem wenigstens einen Strömungskanal fixieren. Dabei kann dieser Abstand auch innerhalb eines Verdampferabschnitts in Strömungsrichtung des Ammoniak-Vorläufers variieren; der Heizleiter kann also einmal beispielsweise näher hin zum Gehäuse und einmal näher zum Strömungskanal positioniert sein. Durch den Abstand des Heizleiters zum Strömungskanal kann ebenfalls eine gezielte Beeinflussung des Temperaturprofils im Strömungskanal vorgenommen werden, wobei gleichzeitig auch eine intensive Verbindung mit einem der beiden Komponenten verhindert werden kann, was gegebenenfalls Vorteile bei der Wartung bzw. Instandsetzung solcher Heizleiter bringen kann.

Darüber hinaus wird auch vorgeschlagen, dass zumindest der wenigstens eine Strömungskanal oder der wenigstens eine Heizleiter in einem, zumindest Aluminium oder Kupfer umfassenden, Grundkörper eingegossen ist. Insbesondere kann der (ggf. mehrteilig aufgebaute) Grundköper mit einem Mantel/Gehäuse aus Aluminium und darin befindlichen Kupfer-Komponenten ausgebildet sein. Bevorzugt ist, dass beide Elemente in einem (einzelnen) Grundköper vergossen sind. Das Vergießen von Heizleiter und Strömungskanal (bzw. die Wand des Strömungskanals) führt dazu, dass eine besonders gute Wärmeleitung vom Heizleiter hin zum Strömungskanal besteht. Aluminium als Werkstoff für den Grundkörper hat den Vorteil, dass dieses Material besonders gut zu vergießen ist und eine ausgezeichnete Wärmeleitfähigkeit aufweist. Gleichzeitig wird das Gewicht der Verdampfungseinheit gering gehalten, was im Automobilbau immer eine wichtige Richtgröße ist.

Der Grundkörper kann insbesondere auch als Mittel zur Beabstandung des Heizleiters vom Gehäuse und dem Strömungskanal dienen. Insbesondere ist es möglich, ein strukturiertes bzw. mäanderförmiges Titanrohr mit Aluminium, Kupfer und/oder einem anderem wärmeleitfähigen Material mit einem niedrigeren Schmelzpunkt als Titan zu umgießen (Grundkörper). Dadurch kann insbesondere wieder ein Rohr-ähnlicher Körper mit einer "glatten" Außenwand erzeugt werden. In diese Außenwand kann dann ein Pfad für den mindestens einen Heizleiter eingebracht werden, z.B. nach Art eines Gewindes oder dergleichen. In diesen Pfad (z.B. nach Art einer Nut) kann nun der Heizleiter positioniert und mit dem Grundkörper verbunden (z.B. verlötet) werden.

Gemäß einer weiteren vorteilhaften Ausführungsform ist zumindest der Strömungskanal oder der wenigstens eine Heizleiter in einem ein Kupfergranulat umfassenden Grundkörper angeordnet. Insbesondere werden der Strömungskanal und der wenigstens eine Heizleiter in einem Gehäuse (z.B. aus Aluminium) angeordnet und durch das Kupfergranulat fixiert. Das Kupfergranulat wird insbesondere verpresst, so dass eine ausreichende Kontaktierung des wenigstens einen Heizleiters und der Wand des Strömungskanals gewährleistet ist und ein entsprechender Wärmeübergang erfolgt. Die Verpressung des Kupfergranulats führt weiterhin insbesondere zu einer homogenen Verteilung des Kupfergranulats und ermöglicht somit einen gleichmäßigen Wärmeübergang von Heizleiter zu Strömungskanal. Der Einsatz von Kupfergranulat ist gegenüber dem Vergießen des Heizleiters und des Strömungskanals in einem Grundkörper insbesondere energetisch günstiger und prozesstechnisch einfacher auszuführen. Lunker und andere Inhomogenitäten des Gusskörpers müssen damit nicht überprüft werden. Auch wenn hier grundsätzlich Granulat aus Kupfer bevorzugt ist, können kumulativ und/oder alternativ Granulate aus anderem Material (wie z.B. Aluminium) ebenfalls eingesetzt werden, die eine ähnliche Wärmeleitung vom Heizleiter hin zum Strömungskanal ermöglichen.

Nach einer Weiterbildung der Verdampfungseinheit ist vorgesehen, dass zwischen Gehäuse und dem wenigstens einen Heizleiter zumindest eine thermische Isolierung positioniert ist. Die thermische Isolierung umfasst insbesondere ein Material, das die Ausbreitung der Wärme, die von dem Heizleiter ausgeht, hin zum Gehäuse behindert (insbesondere im Vergleich zur Wärmeleitung mit dem Grundkörper). Geeignete Materialien sind hier insbesondere Beschichtungen und/oder separate Bauteile, die bevorzugt keramische Werkstoffe umfassen. In Kombination oder alternativ dazu wird vorgeschlagen, Vakuum-Räume vorzusehen, die ebenfalls eine Ausbreitung der Wärme behindern.

Darüber wird als vorteilhaft angesehen, dass die Verdampfungseinheit mit einem ersten Verdampfungsabschnitt und einem zweiten Verdampfungsabschnitt ausgebildet ist und zumindest die Anordnung, Anzahl oder Gestalt von zumindest einem der folgenden Elemente variiert: mäanderförmiger Strömungskanal, Heizleiter, Wand, Grundkörper, Isolierung. Ganz besonders bevorzugt ist, dass eine Mehrzahl der genannten Elemente, insbesondere mindestens drei Elemente ausgehend vom ersten Verdampfungsabschnitt hin zum zweiten Verdampfungsabschnitt verschieden ist. Damit ist nicht nur gemeint, dass innerhalb der Verdampfungsabschnitte eine Veränderung hinsichtlich Anordnung, Anzahl oder Gestalt der Elemente vorliegt, vielmehr kann alternativ oder kumulativ in dem Zwischenbereich zwischen den Verdampfungsabschnitten eine Variation vorgesehen sein. Im Hinblick auf den mäanderförmigen Strömungskanal kann insbesondere die Anzahl der zum Einsatz gelangenden Strömungskanäle, die Verlaufsform, das den Strömungskanal bildende Material und/oder der Querschnitt des Strömungskanals variiert werden. Im Hinblick auf den Heizleiter wird beispielsweise die Heizleistung, die Anzahl der Heizleiter, der Abstand des Heizleiter hin zum Strömungskanal und/oder zum Gehäuse und/oder der Steuerung des Heizleiters als variierbar angesehen. Bezüglich der Wand sei beispielhaft angerührt, dass hier Material, Beschichtung und/oder Wanddicke angepasst werden können. Der Grundkörper kann beispielsweise in einem Verdampfungsabschnitt und/oder zwischen mehreren Verdampfungsabschnitten mit Hohlräumen, zusätzliche Materialien oder dergleichen ausgeführt sein. Auch die. Isolierung kann in den Verdampfungsabschnitten selbst und/oder in den Zwischenräumen verändert werden, beispielsweise durch die Anzahl der Isolierschichten und/oder die hierzu eingesetzten Materialien.

Außerdem wird auch als vorteilhaft angesehen, dass die Verdampfungseinheit mit einem ersten Verdampfungsabschnitt und einem zweiten Verdampfungsabschnitt ausgebildet ist, wobei der erste Verdampfungsabschnitt und der zweite Verdampfungsabschnitt parallel zueinander angeordnet und mit einem Wendeabschnitt miteinander verbunden sind. Bei der hier vorgeschlagenen Variante mit einem ersten Verdampfungsabschnitt und einem zweiten Verdampfungsabschnitt soll eine besonders kompakte Anordnung erreicht werden. Dazu verläuft der Strömungskanal zumindest für einen Bereich benachbart zu sich selbst bzw. in paralleler Anordnung. Dabei ist festzuhalten, dass "parallel" nicht streng im mathematischen Sinne angesehen werden kann, sondern es kommt hierbei im Wesentlichen darauf an, dass der Strömungskanal benachbart zueinander verläuft, um gerade so platzsparend in der Verdampfungseinheit positioniert werden zu können und zudem gegebenenfalls ein Wärmeaustausch der benachbart zueinander angeordneten Bereiche des Strömungskanal erlaubt beziehungsweise begünstigt ist. Diese beiden parallelen Verdampfungsabschnitte sind mit einem Wendeabschnitt miteinander verbunden, der beispielsweise nach Art einer halbreisförmigen Umbiegung ausgeführt ist.

Bei dieser Variante ist es besonders bevorzugt, dass gleichzeitig verschiedene Heizleiter vorgesehen sind. So wird beispielsweise als vorteilhaft angesehen, dass im ersten Verdampfungsabschnitt selbstregelnde PTC-Elemente eingesetzt werden (positive temperature coefficient). Diese PTC-Elemente sind stromleitende Materialien, die bei tieferen Temperaturen den Strom besser leiten können als bei hohen. Der elektrische Widerstand vergrößert sich bei steigender Temperatur. Das bedeutet mit anderen Worten auch, dass mit steigender Temperatur die Heizleistung ebenfalls geringer wird. Dies kann insbesondere auch durch den benachbarten zweiten Verdampfungsabschnitt beeinflusst werden. In diesem zweiten Verdampfungsabschnitt ist bevorzugt der koaxial zum Strömungskanal angeordnete Heizleiter vorgesehen. Gegebenenfalls kann es auch sinnvoll sein, den Wendeabschnitt mit dem koaxial angeordneten Heizleiter auszufahren, um hier die gewünschten Temperaturen zu erreichen bzw. zu halten.

Des Weiteren wird auch vorgeschlagen, dass benachbart zum Auslauf des wenigstens einen Strömungskanals zumindest ein Reaktorraum mit einer Hydrolyse-Beschichtung vorgesehen ist. Das bedeutet mit anderen Worten, dass hier bevorzugt eine mindestens zwei-stufige Hydrolyse innerhalb der Verdampfungseinheit (Abgas extern) durchgeführt wird. Für den Fall, dass mehrere Verdampfungsabschnitte vorgesehen sind, kann in wenigstens einem Verdampfungsabschnitt, bevorzugt aber in allen Verdampfungsabschnitten und dem Reaktorraum eine Hydrolyse erfolgen. Der Reaktorraum kann hierzu auch eine vergrößerte Anzahl von Strömungskanälen aufweisen, beispielsweise durch die Bereitstellung eines darin integrierten Wabenkörpers. Ein solcher Wabenkörper ist insbesondere mit einer Mehrzahl von zumindest teilweise strukturierten Metallfolien ausgeführt. Diese Metallfolien sind bevorzugt mit einer Hydrolyse-Beschichtung versehen. Auch in diesem Zusammenhang kann Titan als wesentlicher Werkstoff eingesetzt werden.

Darüber hinaus wird eine Vorrichtung umfassend zumindest ein Reservoir, eine Dosierpumpe, eine Verdampfungseinheit der erfindungsgemäßen Art sowie zumindest ein, die vorstehenden Komponenten zumindest teilweise verbindenden, Leitungsabschnitt umfasst. Das Reservoir stellt gerade bei Einsatz einer Harnstoff-Wasser-Lösung, ein Flüssigkeitstank dar. Die Dosierpumpe, die bevorzugt zwischen Reservoir und Verdampfungseinheit positioniert ist, kann die Harnstoff-Wasser-Lösung in besonders kurzen Zeiträumen und mit sehr hoher Genauigkeit zur Verdampfungseinheit zuführen. Der Leitungsabschnitt ist bevorzugt mit einem Aluminium- und/oder Stahl-Rohr gebildet. Zusätzlich kann die Vorrichtung Sensoren und/oder eine (elektrische) Steuerung und/oder Ventile umfassen.

Ganz besonders bevorzugt wird auch ein Kraftfahrzeug mit einer Verbrennungskraftmaschine und einer Abgasanlage vorgeschlagen, wobei die Abgasanlage zumindest einen SCR-Katalysatorkörper aufweist und zwischen der Verbrennungskraftmaschine und dem zumindest einen SCR-Katalysatorkörper wenigstens ein Anschluss mit einer Verdampfungseinheit der erfindungsgemäßen Art oder einer Vorrichtung, wie vorstehend beschrieben, vorgesehen ist, so dass gasförmiger Ammoniak so in die Abgasanlage einleitbar ist, dass diese zum zumindest SCR-Katalysatorkörper strömt. Ganz besonders bevorzugt ist dabei, dass zwischen dem Auslauf des mäanderförmigen Strömungskanals bzw., soweit vorhanden, dem Ende des Reaktorraums einerseits und dem Anschluss bzw. der Abgasanlage andererseits kein weiteres Ventil vorgesehen ist. Gegebenenfalls kann der Anschluss noch Mittel zur Verteilung des Ammoniak umfassenden Gasstroms, welcher die Verdampfungseinheit verlässt und dem Abgas in der Abgasanlage zugeführt wird, aufweisen.

Als SCR-Katalysatorkörper wird üblicher Weise ein (keramischer, extrudierter) Wabenkörper eingesetzt, der z.B. eine SCR-Beschichtung aufweist. Eine solche SCR-Beschichtung ist bevorzugt vom V2O5/WO3/TiO2-Typ (Vanadiumpentoxid/Wolframtrioxid/Titandioxid).

Die Erfindung sowie das technische Umfeld werden nachfolgend anhand der Figuren näher erläutert. Es ist darauf hinzuweisen, dass die in den Figuren veranschaulichten Ausführungsvarianten die Erfindung nicht beschränken sollen. Für gleiche Gegenstände werden in den Figuren auch gleiche Bezugszeichen verwendet. Es zeigen schematisch:
- Fig. 1:: eine Ausführungsvariante einer erfindungsgemäßen Verdampfungseinheizt,
- Fig. 2:: ein Detail einer weiteren Ausführungsform einer Verdampfungseinheit,
- Fig. 3:: schematisch den Aufbau eines SCR-Systems bei einem Kraftfahrzeug,
- Fig. 4:: einen weiteren Aufbau einer Verdampfungseinheit, und
- Fig. 5:: einen Querschnitt durch einen weiteren Aufbau einer Verdampfungseinheit mit Kupfergranulat.

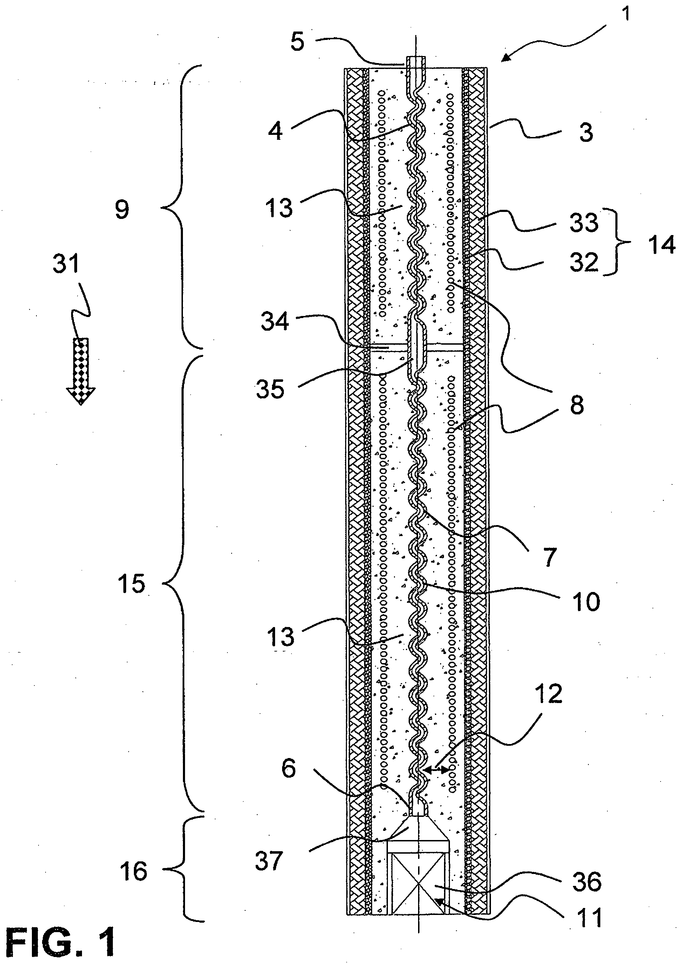

Die Fig. 1 zeigt in einem Querschnitt eine erste besonders bevorzugte Ausführungsvariante einer Verdampfungseinheit 1. Die Verdampfungseinheit 1 ist mit einem rohrförmigen Gehäuse 3 aus Stahl außen begrenzt. In Strömungsrichtung 31 des zu verdampfenden Fluides (z.B. eine Harnstoff Wasser-Lösung) ist die Verdampfungseinheit 1 in drei (3) Teilbereiche unterteilbar, nämlich in einen ersten Verdampfungsabschnitt 9, einen zweiten Verdampfungsabschnitt 15 und einen Reaktorraum 16.

Zentrales Bauteil der Verdampfungseinheit 1 ist der zentral angeordnete mäanderförmige Strömungskanal 4, der mit einer Wand 7 umfassend ein Rohr 10 aus Titan begrenzt ist. Mit dem Rohr 10 aus Titan ist in den beiden Verdampfungsabschnitten 9, 15 ein wellenförmiger Verlauf des Strömungskanals 4 realisiert. Dabei tritt insbesondere Harnstoff Wasser-Lösung in den Einlauf 5 in flüssiger Form ein und durchläuft dann den ersten Verdampfungsabschnitt 9.

Das Rohr 10 ist von einem Grundkörper 13 umgeben, der insbesondere aus einem Aluminium-Werkstoff oder einem Kupfer-Werkstoff gebildet ist. Wie das Rohr 10 aus Titan so ist auch der Heizleiter 8 mit in den Grundkörper 13 eingegossen. Der hier zylindrisch ausgeführte Grundkörper 13 erstreckt sich im Wesentlichen über die Länge des ersten. Verdampfungsabschnitts 9 und wird außen durch eine Keramikschicht 32 begrenzt. Die Keramikschicht 32 kann insbesondere mit einem. Keramikpulver ausgeführt sein. Weiter außen, zwischen der Keramikschicht 32 und dem Gehäuse 3, ist ein zusätzliches Keramikrohr 33 vorgesehen. Die Keramikschicht 32 und das Keramikrohr 33 bilden zusammen eine thermische Isolierung 14. Während die thermische Isolierung 14 und das Gehäuse 3 sowie das Rohr 10 aus Titan über den ersten Verdampfungsabschnitt 9 und den zweiten Verdampfungsabschnitt 15 einteilig ausgebildet sind, sind in jeweils dem ersten Verdampfungsabschnitt 9 und dem zweiten Verdampfungsabschnitt 15 jeweils ein separater Grundkörper 13 vorgesehen. Ebenso sind hier unterschiedliche Heizleiter 8, gegebenenfalls mit separaten Anschlüssen, ausgebildet.

Zwischen den beiden Grundkörpern 13 ist zudem ein Spalt 34 vorgesehen, der insbesondere in axialer Richtung eine thermische Isolierung darstellt. Damit sollen die Temperaturprofile von erstem Verdampfungsabschnitt 9 und zweitem Verdampfungsabschnitt 15 gegebenenfalls getrennt voneinander regel- bzw. einstellbar sein. Im Übergangsbereich zwischen ersten Verdampfungsabschnitt 9 und zweitem Verdampfungsabschnitt 15 ist auch der Strömungskanal 4 anders ausgestaltet, hier nämlich mit einem (verbreiterten, gradlinigen) Übergangsabschnitt 35. Im ersten Verdampfungsabschnitt 9 und im zweiten Verdampfungsabschnitt 15 ist ein Abstand 12 zwischen dem Heizleiter 8 und dem Strömungskanal 4 im Wesentlichen gleich.

Im Bereich des Auslaufs 6 des Strömungskanals 4 weist der Grundkörper 13 nachfolgend eine Aufweitung 37 auf, in welche die bis dahin (nahezu) vollständig verdampfte Harnstoff-Wasserstoff-Lösung hinein entspannt. Daran anschließend ist ein Reaktorraum 16 ausgebildet, in dem ein Wabenkörper 36 mit einer Hydrolyse-Beschichtung 11 vorgesehen ist. Das vollständig zu Ammoniak umgewandelte Gas verlässt nun die Verdampfungseinheit 1 und kann in die Abgasanlage strömen.

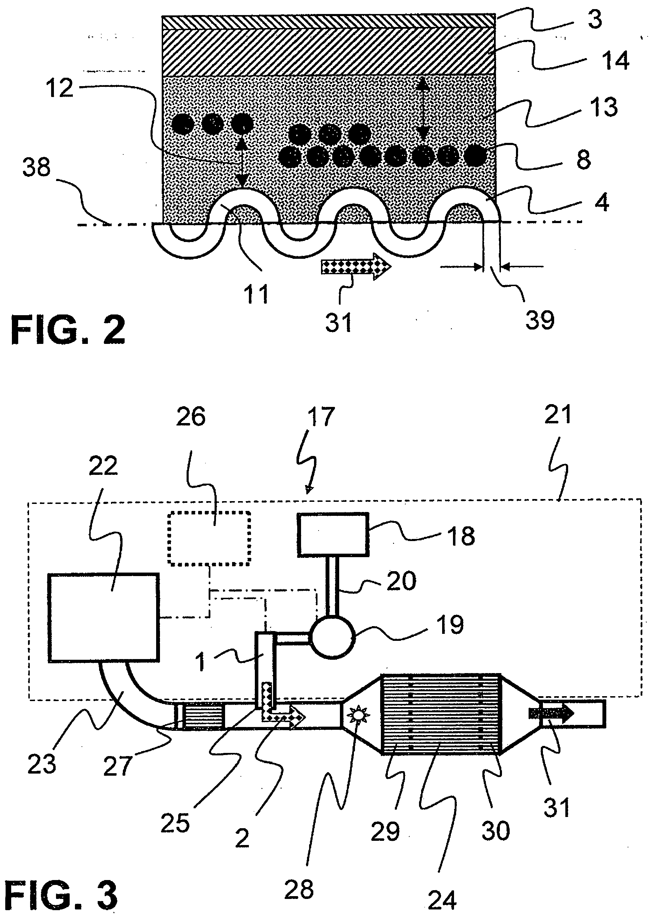

Die Fig. 2 zeigt ein Detail einer weiteren Ausführungsform der Verdampfungseinheit 1 im Teilquerschnitt. Unten in Fig. 2 ist dargestellt, wie der Strömungskanal 4 um eine zentrale Achse 38 regelmäßig pendelt. Der Strömungskanal 4 hat dabei einen Durchmesser 39 von beispielsweise 4 mm. Im Inneren des Strömungskanals 4. bzw. an dessen Wand 7 ist zudem eine Hydrolyse-Beschichtung 11 vorgesehen. Der Strömungskanal 4 ist jedoch in einem Grundköper 13 eingegossen, in dem auch die Heizleiter 8 nach Art einer wendelförmigen Windung bereitgestellt sind. Im linken Bereich ist dabei ein Heizleiter 8 angedeutet, der mit einem bestimmten Abstand 12 zum Strömungskanal 4 positioniert ist. Weiter rechts sind mehrere, sich teilweise überlagernde, Heizleiter 8, insbesondere in einer engeren Anordnung zueinander vorgesehen, wobei hier nun der Abstand 12 hin zum Gehäuse 3 bzw. der thermischen Isolierung 14 vergrößert wurde, so dass diese Heizleiter 8 näher am Strömungskanal 4 vorgesehen sind.

Fig. 3 zeigt nunmehr schematisch ein Kraftfahrzeug 21, insbesondere einen Personenkraftwagen oder einen Lastkraftwagen. Das in der Verbrennungskraftmaschine 22 generierte Abgas wird nun über eine entsprechende Abgasanlage 23 gereinigt und an die Umgebung freigelassen. Dabei durchströmt das Abgas in Strömungsrichtung 31 zunächst einen katalytischen Konverter 27 (z.B. einen Oxidations-Katalysator), um weiter stromabwärts schließlich auf einen SCR-Katalysatorkörper 24 zu treffen. Zwischen dem katalytischen Konverter 27 und dem SCR-Katalysatorkörper 24 ist der Anschluss 25 für die erfindungsgemäße Verdampfungseinheit 1 vorgesehen, so dass dort der Ammoniak umfassende Gasstrom 2 eingeleitet wird. Der mit Ammoniak beströmte Abgasstrom erreicht dann gegebenenfalls einen Strömungsbeeinflusser 28 (z.B. einen statischen Mischer), bevor dieses Gemisch den SCR-Katalysatorkörper 24 erreicht. Der Vollständigkeit halber sei darauf hingewiesen, dass der SCR-Katalysator im Eintrittsbereich 29 und/oder im Austrittsbereich 30 mit weiteren Abgasbehandlungskomponenten versehen sein kann, wie beispielsweise einem Partikelabscheider im Eintrittsbereich 29 und/oder einem. Oxidationskatalysator im Austrittsbereich 30. Gleichfalls sei darauf hingewiesen, dass auch andere Abgasbehandlungseinrichtungen in der Abgasanlage 23 vorgesehen sein können.

Die erfindungsgemäße Verdarnpfungseinheit 1 ist nun über mehrere Leitungsabschnitte 20 mit einem Reservoir 18 verbunden. In dem Reservoir 18 ist beispielsweise flüssige Harnstoff-Wasser-Lösung vorgesehen, die dann mittels einer Dosierpumpe 19 zeit- und/oder volumengerecht der Verdampfungseinheit 1 zugeführt wird. Zu diesem Zweck können die Dosierpumpe 19, die Verdampfungseinheit 1 und/oder die Verbrennungskraftmaschine 22 mit einer Steuerung 26 (datentechnisch und/oder wirktechnisch) verbunden sein, um hier eine geregelte Beimengung von Harnstoff-Wasser-Lösung zur Verdampfungseinheit bzw. Ammoniakgas zum Abgas zu gewährleisten.

Nur der Vollständigkeit halber sei auch darauf hingewiesen, dass eine Vorrichtung 17 umfassend wenigstens ein Reservoir 18, ein Leitungsabschnitt 20, eine Dosierpumpe 19 und eine Verdampfungseinheit 1 in beliebigen Stückzahlen auch separat als Komponentensatz mit/oder ohne Steuerung 26 angeboten werden kann.

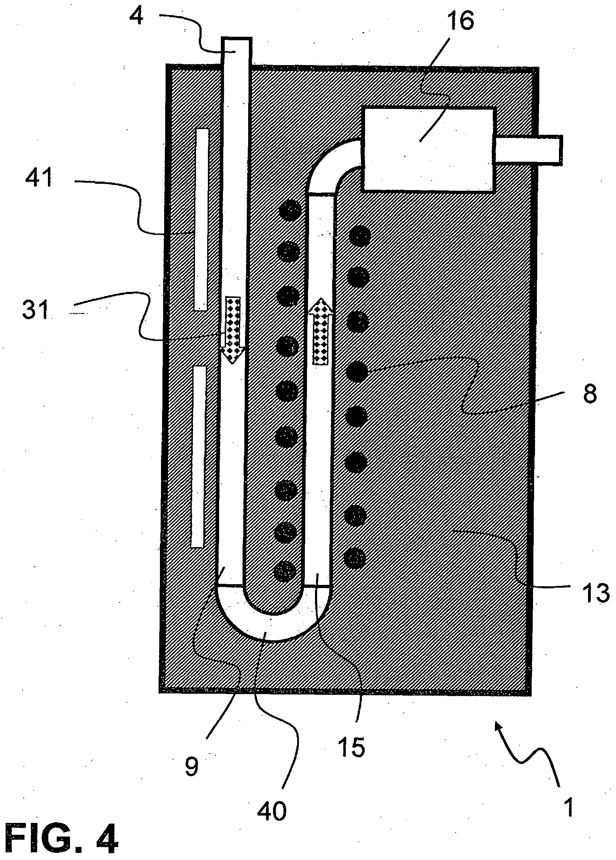

Die Fig. 4 zeigt schematisch eine Ausführungsvariante mit einer Verdampfungseinheit 1 mit einem Grundkörper 13, der hier im Schnitt dargestellt ist. In dem Grundkörper 13 ist der Strömungskanal 4 vorgesehen, wobei er sich zunächst in eine Richtung in den Grundkörper 13 hinein erstreckt. Auf einer Seite des Strömungskanals 4 sind mehrere PTC-Elemente zum elektrischen Heizen des Strömungskanals 4 bzw. des darin in Strömungsrichtung 31 strömenden Gas-Flüssigkeits-Gemischs vorgesehen. Dieser Bereich bildet nun einen ersten Verdampfungsabschnitt 9. Daran anschließend ist ein Wendeabschnitt 40 vorgesehen, bei dem die Strömungsrichtung 31 um 180° gewendet wird. Daran anschließend ist ein zweiter Verdampfungsabschnitt 15 ausgebildet. Um diesen Abschnitt des Strömungskanals 4 ist ein koaxialer Heizleiter 8 vorgesehen. Bevor der Gasstrom nun die Verdampfungseinheit wieder verlässt, wird das Gas noch über einen Reaktorraum 16 geführt, um die Erzeugung von Ammoniak weiter zu begünstigen. Bei der hier vorgeschlagenen Anordnung können insbesondere Wärmeaustausch-Effekte zwischen erstem Verdampfungsabschnitt 9 und zweitem Verdampfungsabschnitt 15 erreicht werden, so dass ein energetisch günstiger Aufbau angegeben ist.

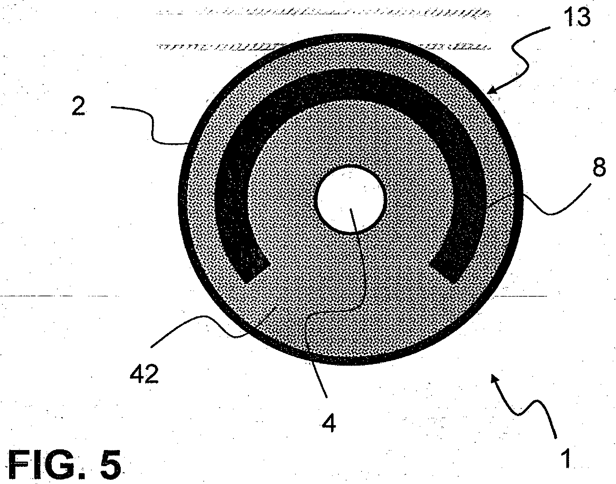

Fig. 5 zeigt schematisch und in einem Querschnitt einer weiteren Ausgestaltung einer Verdampfungseinheit 1. Diese weist ein Gehäuse 2 nach Art eines Rohres auf, wobei zentral der Strömungskanal 4 und koaxial dazu ein Heizleiter 8 angeordnet sind. Der Strömungskanal 4 und der Heizleiter 8 sind mit Kupfergranulat 42 umgeben, so dass durch einen entsprechenden Kontakt des Kupfergranulats 42 mit dem Strömungskanal 4 einerseits und der Heizleiter 8 andererseits eine Wärmeübertragung erfolgen kann. Dazu ist insbesondere das zwischen Strömungskanal 4 und der Heizleiter 8 angeordnete Kupfergranulat 42 verpresst.

### Bezugszeichenliste

- 1: Verdampfungseinheit
- 2: Gasstrom
- 3: Gehäuse
- 4: Strömungskanal
- 5: Einlauf
- 6: Auslauf
- 7: Wand
- 8: Heizleiter
- 9: erster Verdampfungsabschnitt
- 10: Rohr
- 11: Hydrolyse-Beschichtung
- 12: Abstand
- 13: Grundkörper
- 14: Isolierung
- 15: zweiter Verdampfungsabschnitt
- 16: Reaktorraum
- 17: Vorrichtung
- 18: Reservoir
- 19: Dosierpumpe
- 20: Leitungsabschnitt
- 21: Kraftfahrzeug
- 22: Verbrennungskraftmaschine
- 23: Abgasanlage
- 24: SCR-Katalysatorkörper
- 25: Anschluss
- 26: Steuerung

- 27: Katalytischer Konverter
- 28: Strömungsbeeinflusser
- 29: Eintrittsbereich
- 30: Austrittsbereich
- 31: Strömungsrichtung
- 32: Keramikschicht
- 33: Keramikrohr
- 34: Spalt
- 35: Übergangsabschnitt
- 36: Wabenkörper
- 37: Aufweitung
- 38: Achse
- 39: Durchmesser
- 40: Wendeabschnitt
- 41: PTC-Element
- 42: Kupfergranulat

## Patentansprüche

1. Verdampfungseinheit (1) zur Erzeugung eines Ammoniak umfassenden Gasstromes (2) aufweisend zumindest:
- ein Gehäuse (3),
- wenigstens einen mäanderförmigen Strömungskanal (4) mit einem Einlauf (5) und einem Auslauf (6), der von einer geschlossenen Wand (7) begrenzt ist,
- wenigstens einen Heizleiter (8), der zumindest in einem ersten Verdampfungsabschnitt (9) des wenigstens einen Strömungskanals (4) zwischen Gehäuse (3) und der Wand (7) angeordnet ist und koaxial verläuft.

2. Verdampfungseinheit (1) nach Patentanspruch 1, wobei die geschlossene Wand (7) mit einem Rohr (10) umfassend Titan gebildet ist.

3. Verdampfungseinheit (1) nach Patentanspruch 1 oder 2, wobei die Wand (7) zumindest teilweise mit einer Hydrolyse-Beschichtung (11) versehen ist.

4. Verdampfungseinheit (1) nach einem der vorhergehenden Patentansprüche, wobei der wenigstens eine Heizleiter (8) zumindest in dem ersten Verdampfungsabschnitt (9) beabstandet zum Gehäuse (3) und dem wenigstens einen Strömungskanal (4) angeordnet ist.

5. Verdampfungseinheit (1) nach einem der vorhergehenden Patentansprüche, wobei zumindest der wenigstens eine Strömungskanal (4) oder der wenigstens eine Heizleiter (8) in einen, zumindest Aluminium oder Kupfer umfassenden, Grundkörper (13) eingegossen ist.

6. Verdampfungseinheit (1) nach einem der Patentansprüche 1 bis 4, wobei zumindest der wenigstens eine Strömungskanal (4) und der wenigstens eine Heizleiter (8) in einem ein Kupfergranulat (42) umfassenden Grundkörper (13) angeordnet ist.

7. Verdampfungseinheit (1) nach einem der vorhergehenden Patentansprüche, wobei zwischen Gehäuse (3) und dem wenigstens einen Heizleiter (8) zumindest eine thermische Isolierung (14) vorgesehen ist.

8. Verdampfungseinheit (1) nach einem der vorhergehenden Patentansprüche, wobei diese mit einem ersten Verdampfungsabschnitt (9) und einem zweiten Verdampfungsabschnitt (15) ausgebildet ist und zumindest die Anordnung, Anzahl oder Gestalt von zumindest einem der folgenden Elemente variiert: mäanderförmiger Strömungskanal (4), Heizleiter (8), Wand (7), Grundkörper (13), Isolierung (14).

9. Verdampfungseinheit nach einem der vorhergehenden Patentansprüche, wobei diese mit einem ersten Verdampfungsabschnitt (9) und einem zweiten Verdampfungsabschnitt (15) ausgebildet ist, wobei der erste Verdampfungsabschnitt (9) und der zweite Verdampfungsabschnitt (15) parallel zueinander angeordnet und mit einem Wendeabschnitt (40) miteinander verbunden sind.

10. Verdampfungseinheit (1) nach einem der vorhergehenden Patentansprüche, wobei benachbart zum Auslauf (6) des wenigstens einen Strömungskanals (4) zumindest ein Reaktorraum (16) mit einer Hydrolyse-Beschichtung (11) vorgesehen ist.

11. Vorrichtung (17) umfassend zumindest ein Reservoir (18), eine Dosierpumpe (19), eine Verdampfungseinheit (1) nach einem der vorhergehenden Patentansprüche sowie zumindest einen, die vorstehenden Komponenten zumindest teilweise verbindenden, Leitungsabschnitt (20).

12. Kraftfahrzeug (21) mit einer Verbrennungskraftmaschine (22) und einer Abgasanlage (23), wobei die Abgasanlage (23) zumindest einen SCR-Katalysatorkörper (24) aufweist und zwischen der Verbrennungskraftmaschine (22) und dem zumindest einen SCR-Katalysatorkörper (24) wenigstens ein Anschluss (25) mit einer Verdampfungseinheit (1) nach einem der vorhergehenden Patentansprüche 1 bis 10 oder eine Vorrichtung (17) nach Patentanspruch 11 vorgesehen ist, so dass gasförmiger Ammoniak so in die Abgasanlage (23) einleitbar ist, dass dieser zum zumindest einen SCR-Katalysatorkörper (24) strömt.

## Claims

1. Evaporation unit (1) for producing a gas flow (2) comprising ammonia, having at least:
- a housing (3),
- at least one meandering flow duct (4) with an inflow (5) and an outflow (6), which flow duct (4) is delimited by a closed wall (7),
- at least one heat conductor (8) which is arranged at least in a first evaporation section (9) of the at least one flow duct (4) between the housing (3) and the wall (7) and which runs coaxially.

2. Evaporation unit (1) according to Patent Claim 1, with the closed wall (7) being formed by a tube (10) comprising titanium.

3. Evaporation unit (1) according to Patent Claim 1 or 2, with the wall (7) being at least partially provided with a hydrolysis coating (11).

4. Evaporation unit (1) according to one of the preceding patent claims, with the at least one heat conductor (8) being arranged spaced apart from the housing (3) and the at least one flow duct (4) at least in the first evaporation section (9).

5. Evaporation unit (1) according to one of the preceding patent claims, with at least the at least one flow duct (4) or the at least one heat conductor (8) being cast into a basic body (13) which comprises at least aluminum or copper.

6. Evaporation unit (1) according to one of Patent Claims 1 to 4, with at least the at least one flow duct (4) and the at least one heat conductor (8) being arranged in a basic body (13) comprising copper granulate (42).

7. Evaporation unit (1) according to one of the preceding patent claims, with at least one thermal insulation (14) being provided between the housing (3) and the at least one heat conductor (8).

8. The evaporation unit (1) according to one of the preceding patent claims, with said evaporation unit (1) being formed with a first evaporation section (9) and a second evaporation section (15) and with at least the arrangement, number or design of at least one of the following elements varying: meandering flow duct (4), heat conductor (8), wall (7), basic body (13), insulation (14).

9. Evaporation unit (1) according to one of the preceding patent claims, with said evaporation unit (1) being formed with a first evaporation section (9) and a second evaporation section (15), with the first evaporation section (9) and the second evaporation section (15) being arranged parallel to one another and being connected to one another via a bend section (40).

10. Evaporation unit (1) according to one of the preceding patent claims, with at least one reactor chamber (16) with a hydrolysis coating (11) being provided adjacent to the outflow (6) of the at least one flow duct (4).

11. Device (17) comprising at least one reservoir (18), a dosing pump (19), an evaporation unit (1) according to one of the preceding patent claims and also at least one line section (20) which at least partially connects the above components.

12. Motor vehicle (21) having an internal combustion engine (22) and an exhaust system (23), with the exhaust system (23) having at least one SCR catalyst body (24), and with at least one port (25) with an evaporation unit (1) according to one of the preceding Patent Claims 1 to 10 or a device (17) according to Patent Claim 11 being provided between the internal combustion engine (22) and the at least one SCR catalyst body (24), such that gaseous ammonia can be conducted into the exhaust system (23) in such a way that said gaseous ammonia flows to the at least one SCR catalyst body (24).

## Revendications

1. Unité (1) d'évaporation pour la production d'un courant (2) gazeux comprenant de l'ammoniac, comportant au moins :
- une enveloppe (3),
- un conduit (4) d'écoulement sinueux, qui a une entrée (5) et une sortie (6) et qui est délimité par une paroi (7) fermée,
- au moins un conducteur (8) chauffant, qui est disposé au moins dans un premier tronçon (9) d'évaporation du au moins un conduit (4) d'écoulement entre l'enveloppe (3) et la paroi (7) et qui s'étend coaxialement.

2. Unité (1) d'évaporation suivant la revendication 1, dans laquelle la paroi (7) fermée est formée d'un tuyau (10) comprenant du titane.

3. Unité (1) d'évaporation suivant la revendication 1, dans laquelle la paroi (7) est pourvue au moins en partie d'un revêtement (11) d'hydrolyse.

4. Unité (1) d'évaporation suivant l'une des revendications précédentes, dans laquelle le au moins un conducteur (8) chauffant est disposé au moins dans le premier tronçon (9) d'évaporation à distance de l'enveloppe (3) et du au moins un conduit (4) d'écoulement.

5. Unité (1) d'évaporation suivant l'une des revendications précédentes, dans laquelle au moins le au moins un conduit (4) d'écoulement ou le au moins un conducteur (8) chauffant sont coulés dans un corps (13) de base comprenant au moins de l'aluminium ou du cuivre.

6. Unité (1) d'évaporation suivant l'une des revendications 1 à 4, dans laquelle au moins le conduit (4) d'écoulement et le au moins un conducteur (8) chauffant sont disposés dans un corps (13) de base comprenant un granulé (42) de cuivre.

7. Unité (1) d'évaporation suivant la revendication 1, dans laquelle il est prévu au moins une isolation (14) thermique entre l'enveloppe (3) et le au moins un conducteur (8) chauffant.

8. Unité (1) d'évaporation suivant l'une des revendications précédentes, dans laquelle celle-ci est constituée en ayant un premier tronçon (9) d'évaporation et un deuxième tronçon (15) d'évaporation et au moins l'agencement, le nombre ou la forme d'au moins l'un des éléments suivants varient : conduit (4) d'écoulement sinueux, conducteur (8) chauffant, paroi (7), corps de base (13), isolation (14).

9. Unité (1) d'évaporation suivant l'une des revendications précédentes, dans laquelle celle-ci est constituée en ayant un premier tronçon (9) d'évaporation et un deuxième tronçon (15) d'évaporation, le premier tronçon (9) d'évaporation et le deuxième tronçon (15) d'évaporation étant disposés parallèlement entre eux et étant reliés entre eux par un tronçon (40) de virage.

10. Unité (1) d'évaporation suivant l'une des revendications précédentes, dans laquelle au moins un espace (16) formant réacteur et ayant un revêtement (11) d'hydrolyse est prévu au voisinage de la sortie (6) du au moins un conduit (4) d'écoulement.

11. Installation (17) comprenant au moins un réservoir (18), une pompe (19) doseuse, une unité (1) d'évaporation suivant l'une des revendications précédentes, ainsi qu'au moins un tronçon (20) de conduite mettant au moins en partie les constituants précédents en communication.

12. Véhicule (21) automobile ayant un moteur (22) à combustion interne et un système (23) d'échappement, le système (23) d'échappement ayant au moins un pot catalytique (24) SCR et, entre le moteur (22) à combustion interne et le au moins un pot (24) catalytique SCR, est prévu au moins un raccord (25) ayant une unité (1) d'évaporation suivant l'une des revendications précédentes 1 à 10 ou un dispositif (17) suivant la revendication 11, de manière à pouvoir envoyer de l'ammoniac gazeux dans le système d'échappement de manière à en faire passer dans le au moins un pot (24) catalytique SCR.
